# FASCICULE DE BREVET EUROPEEN

(11) **EP 1 217 489 B1**
(45) Date de publication et mention de la délivrance du brevet: **29.11.2006**
(21) Numéro de dépôt: 01402846.8
(22) Date de dépôt: 05.11.2001
(51) Int. Cl.: G05D 16/10, F16L 37/56

(54) **Système de détente de fluide à modules dissociables**
Fluidentspannungssystem mit voneinander trennbaren Modulen
Fluid pressure reducing system with splitable modules

(30) Priorité: 14.11.2000 FR 0014657
(43) Date de publication de la demande: 26.06.2002
(73) Titulaire: TAEMA, F-92182 Antony Cédex (FR)
(72) Inventeur: Pin, Fabrice, 91230 Montgeron (FR)
(74) Mandataire: Pittis, Olivier

(56) Documents cités:
- AU-B- 446 468
- US-A- 2 628 850

## Description

L'invention porte sur une unité de détente formée de deux modules dissociables l'un de l'autre.

Lorsque l'on souhaite réaliser une détente d'un fluide circulant c'est-à-dire véhiculant dans une canalisation de fluide, par exemple la détente d'un gaz au sein d'une ligne de gaz, il est d'usage agencer sur le passage du fluide un dispositif ou module de détente permettant de contrôler le passage du fluide de la pression haute d'avant détente à la pression basse d'après détente, c'est-à-dire la pression de détente désirée.

Le document AU-A-446468 enseigne un module monobloc de régulation de pression pou carburateur comportant une chambre de régulation de pression dans laquelle entre et ressort un fluide, et munie en outre d'un passage de sortie de surpression, c'est-à-dire permettant d'extraire du fluide de la chambre en cas de dépassement d'un seuil de pression préfixé dans ladite chambre.

Toutefois, les dispositifs monoblocs de détente existants présentent plusieurs inconvénients.

Ainsi, lorsque ces appareils connus doivent subir une opération de maintenance, de réparation ou d'entretien, il est nécessaire de prendre momentanément le relais avec un autre appareil, de démonter sur place et dans l'urgence l'appareil à réviser pour enfin le remonter et reprendre le relais avec le premier appareil. Toutes ces opérations se font le long du mur, à hauteur d'installation de l'appareil et parfois dans des caissons, des locaux exigus ou peu facilement accessibles.

Ainsi, dans le meilleur des cas, l'intervention a lieu pendant une dizaine de minutes, par exemple si l'on ne procède qu'à un remplacement de pièces d'usure standards.

Par ailleurs, dans les cas les moins favorables, par exemple lorsque l'appareil doit être complètement changé, l'intervention peut se poursuivre sur des durées nettement supérieures, correspondant au cumul du temps nécessaire aux mesures particulières de sécurité, du temps de démontage du dispositif, du temps d'entretien ou réparation proprement dit et de celui de remontage après révision. Dans de tels cas l'interruption du service de gaz est parfois inévitable et doit alors être prévu de longue date avec le service hospitalier.

Dans de ces cas là, on comprend aisément qu'interrompre totalement une circulation de fluide dans les services d'urgence d'un réseau hospitalier, par exemple pendant des durées longues, plusieurs dizaines de minutes à plusieurs heures, n'est pas envisageable et très peu souhaitable de par les conséquences qui peuvent en résulter.

Dès lors, le problème qui se pose est de proposer un dispositif de détente de fluide destiné à être agencé sur une canalisation de fluide et permettant une maintenance facile, c'est-à-dire une maintenance ne nécessitant ni une coupure complète de la circulation du fluide dans la canalisation ou d'en le réseau de canalisations aussi longue qu'avec les dispositifs connus, ni l'utilisation d'outils ou d'appareils complexes.

Le document US-A-2,628,850 propose un système de connexion/déconnexion pour lignes de fluide comportant des valves se fermant automatiquement en cas de déconnexion ne permettant pas de résoudre le problème ci-dessus notamment puisqu'il ne permet pas d'opérer une détende du fluide qui le traverse. Ce système n'est en fait qu'un simple connecteur pour canalisation de fluide.

Le but de l'invention est de résoudre les problèmes qui se posent avec les dispositifs de détente de fluide selon l'art antérieur.

La solution de l'invention est alors un système de détente de fluide formé d'au moins un premier module et d'un deuxième module coopérant l'un avec l'autre pour assurer au moins une détente du fluide et pouvant être associés et/ou dissociés l'un de l'autre, l'association desdits modules l'un avec l'autre étant assurée par des moyens de connexion portés par ledit premier module et/ou ledit deuxième module, dans lequel :
- le premier module assurant au moins une détente du fluide comporte un corps de premier module comprenant :
   . au moins un passage interne de fluide entre un orifice d'entrée de fluide et un orifice de sortie de fluide,
   . des moyens de détente de fluide agencés sur ou dans ledit passage interne de fluide entre lesdits orifices d'entrée de fluide et orifice de sortie de fluide permettant d'assurant une détente du fluide depuis au moins un premier niveau de pression jusqu'à au moins un deuxième niveau de pression, et
- le deuxième module comprend un corps de deuxième module comportant au moins :
   . une première portion de passage de fluide muni d'un orifice d'entrée de fluide et d'un orifice de sortie de fluide par laquelle chemine le fluide à détendre,
   . une deuxième portion de passage de fluide muni d'un orifice d'entrée de fluide et d'un orifice de sortie de fluide par laquelle chemine le fluide après détente dans le premier module, et
   . des moyens à valve permettant de contrôler le cheminement du fluide dans lesdites première portion et/ou deuxième portion de passage de fluide étant agencés dans lesdites première et/ou deuxième portion de passage de fluide
et dans lequel les premier et deuxième modules sont retenus solidaires ou désolidarisés l'un de l'autre par des moyens de connexion comprenant une bague rotative à au moins un ergot coopérant avec au moins un logement aménagé dans au moins un desdits premier et deuxième modules de manière à ce qu'une mise en rotation de la bague par l'opérateur entraîne une translation du premier module dans un sens tendant à le rapprocher ou à l'éloigner du deuxième module, en fonction du sens de mise en rotation, pour permettre une solidarisation ou une désolidarisation, respectivement, desdits premier et deuxième modules l'un avec l'autre.

Selon le cas, le système de l'invention peut comprendre l'une ou plusieurs des caractéristiques suivantes :
- les moyens à valve comprennent un corps de valve venant normalement prendre appui sur un siège de valve sous l'effet de la pression exercée par un moyen élastique de manière à obturer au moins partiellement la portion de passage de fluide dans laquelle sont aménagés lesdits moyens à valve et à empêcher ainsi toute circulation de fluide dans ladite portion de passage de fluide lorsque le premier module et le deuxième module sont dissociés l'un de l'autre.
- les moyens à valve sont agencés dans chacune desdites première et deuxième portion de passage de fluide.
- le premier module comprend au moins un passage interne de fluide comprenant, en série, une chambre haute pression et une chambre basse pression, le corps de valve étant situé entre lesdites chambres haute et basse pressions.
- plusieurs logements sont aménagés dans la paroi externe du premier module, de préférence de 2 à 4 logements sont aménagés dans la paroi du premier module.
- les logements sont des rampes inclinées.
- le passage interne de fluide du premier module comprenant :
   . une première extrémité en saillie raccordée à la chambre haute pression et portant un orifice d'entrée de fluide pour alimenter ladite chambre haute pression en fluide non détendu, et
   . une deuxième extrémité en saillie raccordée à la chambre basse pression et portant un orifice de sortie de fluide pour évacuer le fluide détendu de ladite chambre basse pression.
- lesdites première et deuxième extrémités en saillie du premier module coopèrent les moyens à valve du deuxième module, lorsque le module est associé au module.
- le deuxième module comportent une première connexion et une deuxième connexion de passage de fluide conformées pour recevoir lesdites extrémités en saillies, respectivement, de manière à assurer une continuité fluidique entre l'entrée et la chambre haute pression, d'une part, et entre l'entrée et la chambre basse pression, d'autre part.
- le clapet de détente du premier module est du type permettant un échappement du fluide au travers du corps dudit clapet.
- la bague mobile en rotation est portée par le deuxième module.
- le deuxième module comporte des moyens de purge, de préférence un bouchon de purge.

L'invention porte aussi sur une canalisation de fluide équipée d'au moins un système selon l'invention, de préférence un réseau de plusieurs canalisations, ainsi que sur l'utilisation d'au moins un système selon l'invention pour réaliser une détente d'un fluide véhiculant dans au moins une canalisation de fluide, en particulier de gaz, de préférence la canalisation de fluide est située, au moins en partie, à l'intérieur d'un bâtiment de soins.

De préférence, le deuxième module portant la bague rotative est monté à demeure sur ladite canalisation et le premier module peut être associé ou dissocié dudit deuxième module par actionnement au moins en rotation de la bague pour permettre une solidarisation ou une désolidarisation, respectivement, desdits premier et deuxième modules l'un avec l'autre.

L'invention va maintenant être décrite plus en détail à l'aide d'un exemple de réalisation donné à titre illustratif mais non limitatif.

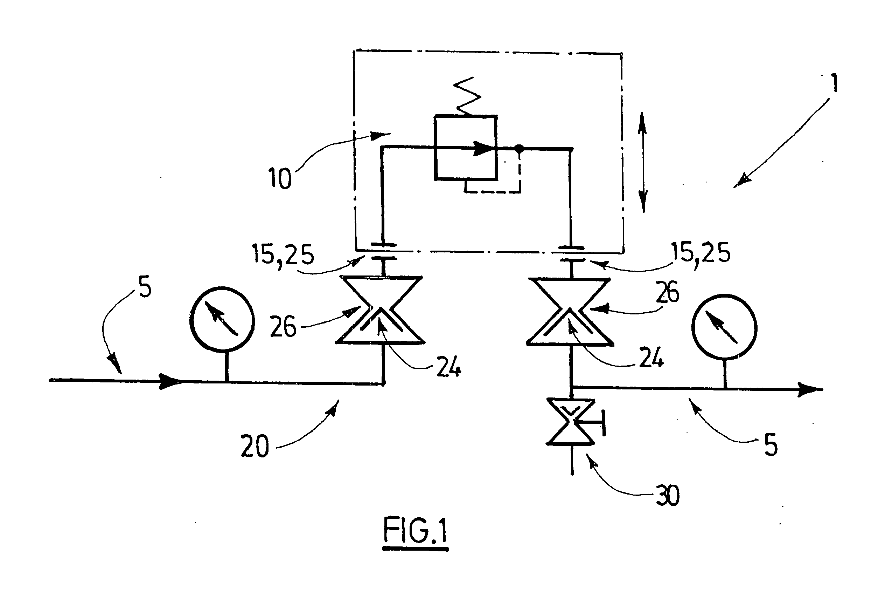

La présente invention consiste donc, comme schématisé sur la figure 1, en un dispositif ou système 1 de détente de fluide formé principalement d'au moins deux modules 10, 20, à savoir un premier 10 et un deuxième 20 modules, coopérant l'un avec l'autre pour assurer la détente du fluide circulant dans une canalisation 5 de fluide, depuis une pression haute jusqu'à une pression de détente souhaitée et inférieure à ladite pression haute. Les modules 10, 20 peuvent être associés et dissociés facilement l'un de l'autre par l'intermédiaire de moyens de connexion 15, 25 portés eux de manière à réduire au maximum la durée d'interruption de la circulation de fluide.

Plus précisément, lorsqu'une opération de maintenance du module 10 de détente détachable, encore appelé premier module 10, l'opérateur peut le déconnecter facilement et rapidement en actionnant les moyens de connexion 15, 25, par exemple par un simple déboîtement de connexions connues.

Le deuxième module 20 ou module de base reste, pendant ce temps, fixé sur la canalisation 5 de fluide, c'est-à-dire qu'il n'est plus nécessaire de le démonter, comme pour les dispositifs selon l'art antérieur.

Pendant, la durée de l'entretien du premier module 10, il est possible de fixer temporairement un module de détente de remplacement, de sorte de minimiser encore la durée d'interruption du fluide.

Lorsqu'une coupure de la distribution de gaz, si brève soit elle est inadmissible, il est toujours possible, comme avec les appareils actuels, d'utiliser un appareil en dérivation qui prend le relais de l'appareil à réparer. Ceci se fait au moyen d'un piquage/d'une prise sur le réseau en amont de l'appareil et d'un piquage en aval ( non représenté).

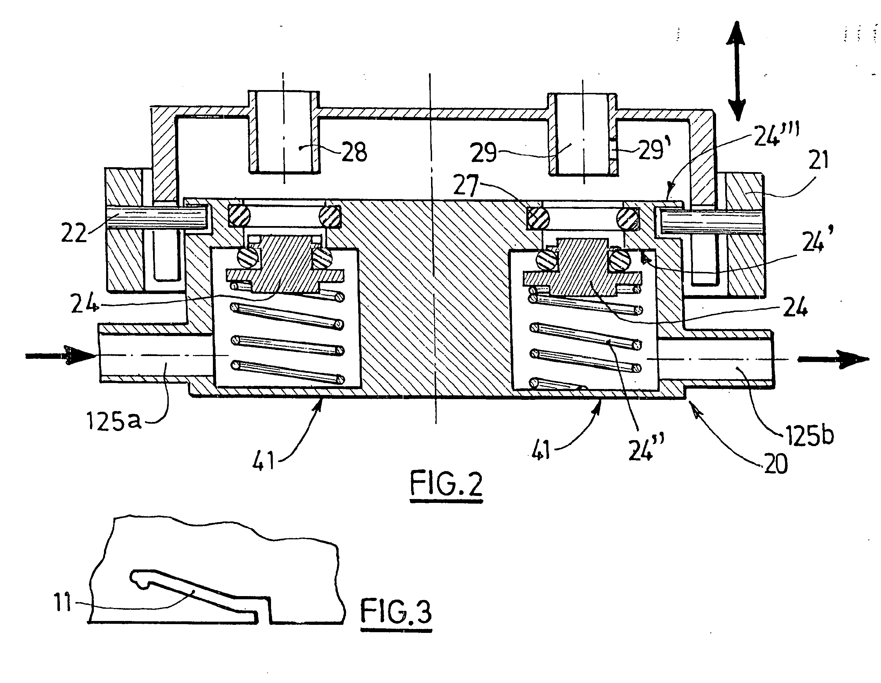

Pour faciliter l'opération de connexion/déconnexion, on peut prévoir sur les modules 10, 20 des moyens de connexion de type bague 21 à ergots 22 et logements 11 adaptés, comme montrés sur les figures 2 et 3.

Dans ce cas, la rotation de la bague 21 à ergots 22 met le module en translation par l'intermédiaires de rampes inclinées ou logements 11 qui effectue la déconnexion en trois temps, à savoir :
- coupure des deux vannes 26, simultanément ou non selon le conception envisagée pour l'appareil, et donc isolement gazeux du module via des clapets 24 adaptés,
- purge du module 20, si nécessaire pour l'application envisagée, pour éviter une décompression brutale et/ou faciliter la manoeuvre de la bague 21. Un ou des orifices 29' pratiqués dans les protusions 29 et/ou 28 permettent au besoin une purge du gaz de 125a vers l'extérieur et/ou de 125b vers l'extérieur et/ou du module 10 vers l'extérieur. Cette purge s'arrête automatiquement quand le module est complètement enfoncé, c'est-à-dire lorsque le ou les orifices 29' des protusions 28 et/ou 29 ont dépassé le joint 27 de la figure 2.
- découplage proprement dit des deux modules 10, 20, l'un de l'autre.

Le profil des rampes 11 inclinées de la figure 3 est conçu pour minimiser les efforts nécessaires, assurer des positions stables ainsi que la déconnexion précise des modules 10, 20.

La bague externe 21 représentée figure 2 est libre en rotation, elle peut être commandée simplement par un levier d'entraînement ou une forme externe appropriée permettant une préhension aisée pour la mouvoir.

Ladite bague 21 est munie au minimum de 2 ou 3 ergots 22 coulissants dans les rampes 11, ménagées en vis-à-vis dans la paroi inférieure externe du module 10, lorsque l'on entraîne la bague en rotation, ce qui se traduit par un déplacement équilibré du module 10 vers le haut ou le bas selon le sens de rotation de la bague 21 comme indiqué par la flèche représentée figure 2. La dite bague 21 peut comporter un nombre d'ergots plus important sachant qu'un nombre de rampes 11 équivalent sur le module 10 sera nécessaire. La bague 21 à ergots coopère donc avec les rampes 11.

Selon l'application envisagée, il peut y avoir déconnexion de une ou plusieurs canalisations ; ici le module de base 20 comporte une entrée 125a pour le fluide avant détente et une sortie 125b pour le fluide après détente.

L'essentiel de l'entretien habituel du système de l'invention étant sur le module détachable 10, il est possible de retirer simplement le module 10 détachable pour effectuer l'entretien dans des conditions plus simples soit sur directement site d'utilisation, soit hors site si l'entretien s'avère plus difficile ; toutefois, en particulier dans le deuxième cas, il est possible de réaliser un échange standard du module 10 pendant son entretien hors site.

Par ailleurs, la partie fonctionnelle du système 1 étant localisée dans le module 10 détachable, il est aisé, en cas de modification des fonctionnalités ou des normes, de faire évoluer l'appareil tout en conservant la partie fixe ou module 20 chez l'utilisateur.

Le système 1 de détente selon l'invention est particulièrement adapté à une utilisation en site hospitalier pour réaliser la détente de gaz médicaux. Néanmoins, ce système de détente 1 convient aussi à tout autre système hydraulique ou pneumatique agencé, en série, sur une canalisation de fluide.

La manipulation du système de l'invention se fait par une seule commande permettant la coupure, simultanée ou en fonction du choix du fabricant, de deux vannes 26 ou plus de type à clapet 24, isolant la partie du système qui se trouve entre elles du reste de la canalisation 5.

De cette façon, on simplifie la manipulation et on augmente la sécurité puisqu'une seule manoeuvre suffit à manipuler deux vannes 26 qui doivent être fermée toutes les deux ensemble grâce à la manipulation de la seule bague 21 qui comporte 5 positions de rotation :
- position marche stable,
- position temporaire de purge,
- position arrêt stable,
- position entretien du module. Cette position n'est accessible que par l'enlèvement volontaire d'une vis de sécurité non représentée,
- position entretien de la bague 21. Des encoches, non représentées, dans l'épaulement 24"' de la figure 2 laissent passer les ergots 22 et permettent de dégager la bague 21 si un changement est nécessaire.

De plus, cela conduit à une simplification des différentes mécanismes et le principe même de fermeture par clapets 24 assure un rattrapage automatique des jeux et donc élimine les réglages et l'usure.

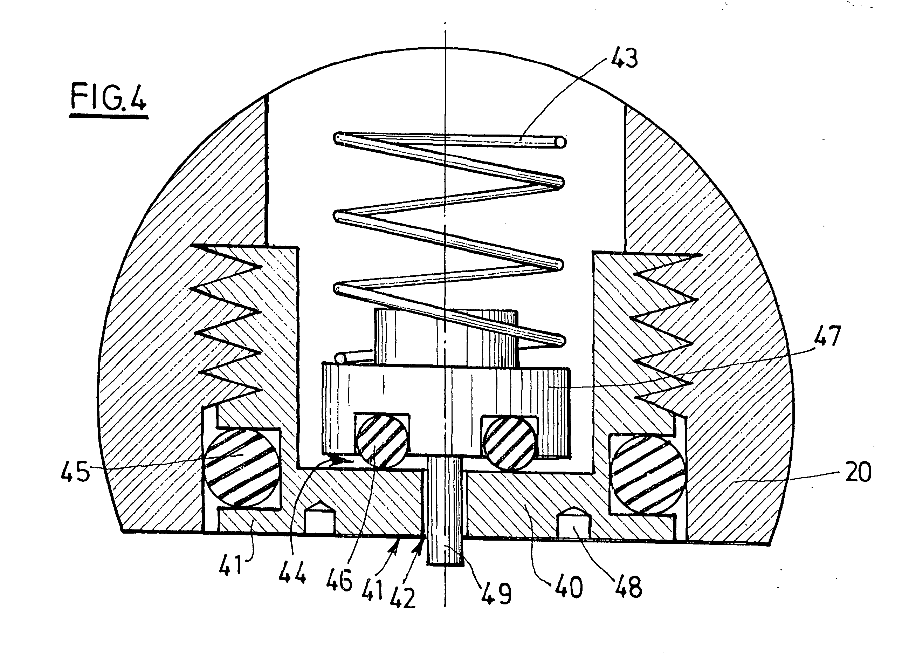

Afin d'améliorer encore la sécurité d'utilisation, on aménage préférentiellement, comme détaillé en figure 4, un système de purge sur le module de base 20, par exemple un ou plusieurs bouchons 40 de purge formés d'un corps 41 de bouchon venant se visser à l'étanchéité (joint torique 45) dans le corps du module de base 20 et dotés chacun d'un clapet de purge 47, normalement repoussé par un ressort 43 sur le siège 44 de clapet de purge aménagé dans le corps 41 du bouchon 40. L'axe 49 sert normalement à centrer et à manipuler le clapet de la purge 47 mais est aussi conçue pour obstruer partiellement l'orifice de purge 42 percé au travers du corps 41 de bouchon et ainsi limiter les fuites en cas de défaillance du joint 45 ou du siège 44. Le ressort 43 peut aussi être, mais pas obligatoirement, le ressort utilisé pour la fermeture d'un des clapets 24 faisant l'étanchéité avec le module précédent.

La fixation du bouchon 40 dans son logement du corps du module de base 20 se fait grâce à des perçages 48 adaptés pour recevoir un outil de serrage, par exemple, mais pas obligatoirement, un outil de serrage standard de prise hospitalière.

Le fait de placer la purge sur un tel bouchon 40 conduit à une fabrication et une maintenance aisées, et offre aussi la possibilité de changer ou carrément de supprimer la purge par le simple remplaçant du bouchon de purge 40 par un bouchon non percé.

Le module 10 peut être tout dispositif installé en série dans une canalisation hydraulique ou pneumatique dont il serait nécessaire de couper, isoler ou interchanger, comme par exemple un ou plusieurs capteurs, des indicateurs, des bouteilles de prise d'échantillons, des points d'injection de fluides ou comme dans l'exemple développé ci-après, un détendeur de gaz.

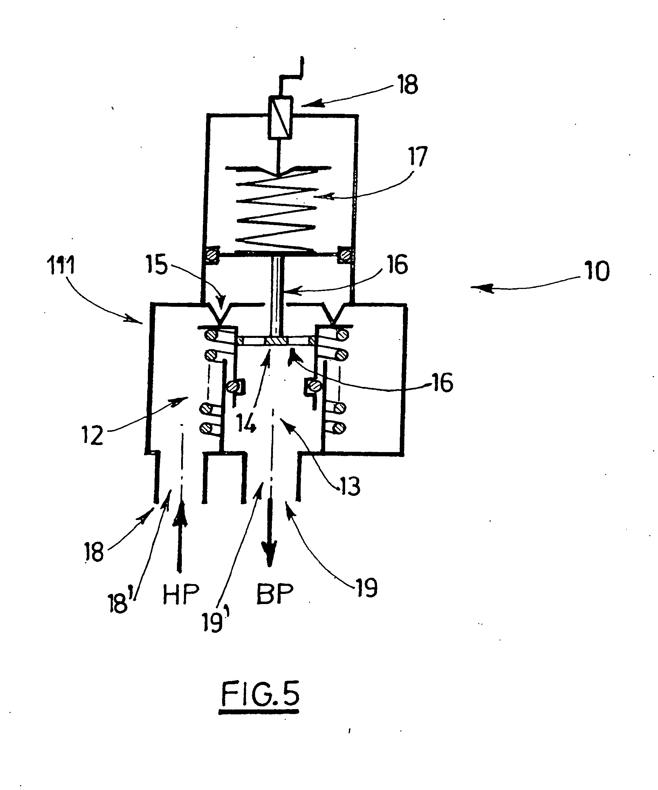

La figure 5 montre un schéma possible d'un module 10 de détente équipant un système selon l'invention, qui comprend un corps 111 de module comprenant au moins une chambre ou passage 12 de fluide à haute pression non encore détendu et au moins une chambre ou passage 13 de fluide à basse pression, c'est-à-dire de fluide détendu.

Dans ce cas, la détente du gaz se fait comme classiquement, c'est-à-dire entre un clapet de détente 14 et son siège 15 mais l'échappement se fait ici au travers 16 même du clapet 14. En d'autres termes, entrée et sortie du gaz sont donc du même coté du clapet 14 .

Cette géométrie originale permet dans un faible encombrement une grande circonférence du clapet 14 et du siège 15, donc à débit égal un faible déplacement du clapet et donc de meilleures performances, en même temps qu'une grande section de passage 16.

Cette géométrie permet, par ailleurs, d'obtenir sans pièce supplémentaire, un clapet de type « clapet compensé » c'est à dire où les forces résultantes de la haute pression s'annulent et donc la variation de pression amont n'influence pas ou très peu le réglage et le fonctionnement du détendeur.

Sur la figure 5, le gaz sous pression élevée arrive donc par la chambre 12, subit une détente entre clapet 14 et siège 15, puis est évacué après détente, via la chambre 13.

La chambre 12 du module 10 de détente est alimentée par le fluide arrivant par l'entrée de fluide 125a du module de base 20, alors que la chambre 13 du module 10 alimente en fluide détendu la sortie de fluide 125b du module de base 20.

Le réglage du niveau de détente se fait par l'intermédiaire de moyens de réglage 18, par exemple à actionnement manuel par l'opérateur, lesquels agissent, directement ou indirectement, sur le clapet 14 de détente, de préférence par le biais d'un ressort 17 de détente.

Les extrémités en saillies 18 et 19 raccordées, respectivement, aux chambres haute 12 et basse 13 pression du module de détente 10 permettent de faire la jonction entre lesdites chambres 12, 13 et les entrée et sortie de fluide 125a, 125b du module de base 20.

Plus précisément, ce sont les extrémités en saillies 18 et 19 qui permettent d'activer les clapets 24 du module de base 20 en allant exercer une pression mécanique sur ceux-ci dans le sens tendant à les décoller de leurs sièges 24' , lorsque le module 10 de détente est associé au module 20 de base, c'est-à-dire une force s'opposant à celle exercée par les ressorts de clapets 24".

En effet, les connexions 28, 29 de passage de fluide portées par le module de base 20 sont conformées pour recevoir lesdites extrémités en saillies 18 et 19, respectivement, de manière à assurer une continuité fluidique entre l'entrée 125a et la chambre haute pression 12, d'une part, et entre l'entrée 125b et la chambre basse pression 13, d'autre part. L'étanchéité est alors assurée par des joints toriques appropriés.

Bien que le mode de réalisation soit préféré, il serait également possible de réaliser un système selon l'invention sur le mode inverse, à savoir que la bague 21 à ergots 22 pourrait être portée par le premier module 10 détachable, alors que les rampes 11 inclinées pourraient être aménagées dans le deuxième module 20 fixe.

## Revendications

1. Système de détente de fluide (1) formé d'au moins un premier module (10) et d'un deuxième module (20) coopérant l'un avec l'autre pour assurer au moins une détente du fluide et pouvant être associés et/ou dissociés l'un de l'autre, l'association desdits modules (10, 20) l'un avec l'autre étant assurée par des moyens de connexion (11, 21, 22) portés par ledit premier module (10) et/ou ledit deuxième module (20), dans lequel :
- le premier module (10) assurant au moins une détente du fluide comporte un corps (111) de premier module comprenant :
. au moins un passage interne (12, 13, 16, 18, 19) de fluide entre un orifice d'entrée de fluide et un orifice de sortie de fluide,
. des moyens de détente (14, 15) de fluide agencés sur ou dans ledit passage interne (12, 13, 16, 18, 19) de fluide entre lesdits orifices d'entrée de fluide et orifice de sortie de fluide permettant d'assurer une détente du fluide depuis au moins un premier niveau de pression jusqu'à au moins un deuxième niveau de pression, et
- le deuxième module (20) comprend un corps de deuxième module comportant au moins :
. une première portion (125a) de passage de fluide muni d'un orifice d'entrée de fluide et d'un orifice de sortie de fluide par laquelle chemine le fluide à détendre,
. une deuxième portion (125b) de passage de fluide muni d'un orifice d'entrée de fluide et d'un orifice de sortie de fluide par laquelle chemine le fluide après détente dans le premier module, et
. des moyens à valve (24, 24', 24") permettant de contrôler le cheminement du fluide dans lesdites première portion (125a) et/ou deuxième portion (125b) de passage de fluide étant agencés dans lesdites première (125a) et/ou deuxième portion (125b) de passage de fluide,
et dans lequel les premier et deuxième modules (10, 20) sont retenus solidaires ou désolidarisés l'un de l'autre par des moyens de connexion comprenant une bague (21) rotative à au moins un ergot (22) coopérant avec au moins un logement (11) aménagé dans au moins un desdits premier et deuxième modules (10, 20) une mise en rotation de la bague (21) par l'opérateur provoquant une translation du ou des ergots (22) dans leur logement (11) et une translation du premier module (10) dans un sens tendant à le rapprocher ou à l'éloigner du deuxième module (20), en fonction du sens de mise en rotation, pour permettre une solidarisation ou une désolidarisation, respectivement, desdits premier et deuxième modules l'un avec l'autre.

2. Système selon la revendication 1, **caractérisé en ce que** plusieurs logements (11) sont aménagés dans la paroi externe du premier module (10).

3. Système selon l'une des revendications 1 ou 2, **caractérisé en ce que** lesdits logements (11) sont des rampes inclinées.

4. Système selon l'une des revendications 1 à 3, **caractérisé en ce que** les moyens à valve (24, 24', 24") sont agencés dans chacune desdites première (125a) et deuxième portion (125b) de passage de fluide, de préférence les moyens à valve (24, 24', 24") comprennent un corps de valve (24) venant normalement prendre appui sur un siège (24') de valve sous l'effet de la pression exercée par un moyen élastique (24") de manière à obturer au moins partiellement la portion de passage de fluide dans laquelle sont aménagés lesdits moyens à valve (24, 24', 24") et à empêcher ainsi toute circulation de fluide dans ladite portion de passage de fluide (125a, 125b), lorsque le premier module (10) et le deuxième module (20) sont dissociés l'un de l'autre

5. Système selon l'une des revendications 1 à 4, **caractérisé en ce que** le premier module (10) comprend au moins un passage interne (12, 13, 16, 16', 18, 19) de fluide comprenant, en série, une chambre haute pression (12) et une chambre basse pression (13), le corps de valve (24) étant situé entre lesdites chambres haute et basse pressions (12, 13).

6. Système selon l'une des revendications 1 à 5, **caractérisé en ce que** le passage interne (12, 13, 18, 19) de fluide du premier module (10) comprenant :
- une première extrémité en saillie (18) raccordée à la chambre haute pression (12) et portant un orifice (18') d'entrée de fluide pour alimenter ladite chambre haute pression (12) en fluide non détendu, et
- une deuxième extrémité en saillie (19) raccordée à la chambre basse pression (13) et portant un orifice (19') de sortie de fluide pour évacuer le fluide détendu de ladite chambre basse pression (13),
et **en ce que** lesdites première et deuxième extrémités en saillie (18, 19) du premier module (10) coopèrent les moyens à valve (24, 24', 24") du deuxième module (20), lorsque le module (10) est associé au module (20).

7. Système selon l'une des revendications 1 à 6, **caractérisé en ce que** au moins un ergot (22) de la bague (21) rotative coopère avec un logement (11) en venant glisser sur celui-ci lors de la rotation de la bague.

8. Système selon l'une des revendications 1 à 7, **caractérisé en ce que** le deuxième module (20) comportent une première connexion (28) et une deuxième connexion (29) de passage de fluide conformées pour recevoir lesdites extrémités en saillies (18, 19), respectivement, de manière à assurer une continuité fluidique entre l'entrée (125a) et la chambre haute pression (12), d'une part, et entre l'entrée (125b) et la chambre basse pression (13), d'autre part.

9. Système selon l'une des revendications 1 à 8, **caractérisé en ce que** le clapet de détente (14) du premier module (10) est du type permettant un échappement du fluide au travers (16) du corps dudit clapet (14).

10. Système selon l'une des revendications 1 à 9, **caractérisé en ce que** le deuxième module (20) comporte des moyens de purge (40 à 49), de préférence un bouchon (40) de purge.

11. Système selon l'une des revendications 1 à 10, **caractérisé en ce que** la bague (21) mobile en rotation est portée par le deuxième module (20).

12. Canalisation de fluide équipée d'au moins un système selon l'une des revendications 1 à 11.

13. Utilisation d'au moins un système selon l'une des revendications 1 à 11 pour réaliser une détente d'un fluide véhiculant dans au moins une canalisation (5) de fluide, en particulier de gaz.

14. Utilisation d'au moins un système selon la revendication 13 selon laquelle le deuxième module (20) portant la bague (21) rotative est monté à demeure sur ladite canalisation (5) et selon laquelle le premier module (10) peut être associé ou dissocié dudit deuxième module (20) par actionnement au moins en rotation de la bague (21) pour permettre une solidarisation ou une désolidarisation, respectivement, desdits premier et deuxième modules l'un avec l'autre.

15. Système selon la revendication 2, **caractérisé en ce que** de 2 à 4 logements sont aménagés dans la paroi du premier module (10).

16. Réseau de plusieurs canalisations selon la revendication 12.

17. Utilisation selon la revendication 13, **caractérisée en ce que** la canalisation (5) de fluide est située, au moins en partie, à l'intérieur d'un bâtiment de soins.

## Claims

1. Fluid pressure reduction system (1) formed from at least a first module (10) and a second module (20) cooperating with each other in order to ensure at least expansion of the fluid and able to be connected to and/or disconnected from each other, the connection of the said modules (10, 20) with each other being provided by connection means (11, 21, 22) carried by the said first module (10) and/or the said second module (20), in which:
- the first module (10) ensuring at least expansion of the fluid has first module a body (111) comprising:
· at least one internal fluid passage (12, 13, 16, 18, 19) between a fluid inlet orifice and a fluid outlet orifice,
. fluid expansion means (14, 15) provided on or in the said internal fluid passage (12, 13, 16, 18, 19) between the said fluid inlet orifices and fluid outlet orifice allowing the fluid to expand from at least a first pressure level to at least a second pressure level; and
- the second module (20) has a second module body comprising at least:
. a first fluid passage portion (125a) provided with a fluid inlet orifice and with a fluid outlet orifice, via which the fluid to be expanded flows,
· a second fluid passage portion (125b) provided with a fluid inlet orifice and with a fluid outlet orifice, via which the fluid after expansion in the first module flows, and
· valve means (24, 24', 24"), making it possible to control the flow of the fluid in the said first fluid passage portion (125a) and/or the said second fluid passage portion (125b), the said valve means being placed in the said first fluid passage portion (125a) and/or the said second fluid passage portion (125b),
and in which the first and second modules (10, 20) are held connected to or disconnected from each other by connection means comprising a rotary ring (21) having at least one stud (22) cooperating with at least one housing (11) made in at least one of the said first and second modules (10, 20), rotation of the ring (21) by the operator causing the stud or studs (22) to move translationally in their housing (11) and causing the first module (10) to move translationally in a direction tending to bring it closer to or further away from the second module (20), depending on the direction of rotation, in order to allow the said first and second modules to be connected together or disconnected, respectively.

2. System according to Claim 1, **characterized in that** several housings (11) are provided in the outer wall of the first module (10).

3. System according to either of Claims 1 and 2, **characterized in that** the said housings (11) are inclined ramps.

4. System according to one of Claims 1 to 3, **characterized in that** the valve means (24, 24', 24") are placed in each of the said first (125a) and second (125b) fluid passage portions, preferably the valve means (24, 24', 24") comprising a valve head (24) which normally bears on a valve seat (24') owing to the effect of the pressure exerted by an elastic means (24") so as to at least partly close off the fluid passage portion in which the said valve means (24, 24', 24") are provided and thus prevent any flow of fluid in the said fluid passage portion (125a, 125b) when the first module (10) and the second module (20) are disconnected from each other.

5. System according to one of Claims 1 to 4, **characterized in that** the first module (10) comprises at least one internal fluid passage (12, 13, 16, 16' 18, 19) comprising, in series, a high-pressure chamber (12) and a low-pressure chamber (13), the valve head (24) being located between the said high-pressure and low-pressure chambers (12, 13).

6. System according to one of Claims 1 to 5, **characterized in that** the internal fluid passage (12, 13, 18, 19) of the first module (10) comprises:
- a first protruding end (18) joined to the high-pressure chamber (12) and carrying a fluid inlet orifice (18') for feeding the said high-pressure chamber (12) with unexpanded fluid; and
- a second protruding end (19) joined to the low-pressure chamber (13) and carrying a fluid outlet orifice (19') for discharging the expanded fluid from the said low-pressure chamber (13); and **in that** the said first and second protruding ends (18, 19) of the first module (10) cooperate with the valve means (24, 24', 24'') of the second module (20) when the first module (10) is connected to the second module (20).

7. System according to one of Claims 1 to 6, **characterized in that** at least one stud (22) of the rotary ring (21) cooperates with a housing (11) so as to slide along the latter when the ring is being rotated.

8. System according to one of Claims 1 to 7, **characterized in that** the second module (20) has a first fluid passage connection element (28) and a second fluid passage connection element (29) which are shaped in order to house the said protruding ends (18, 19) respectively, so as to ensure fluid continuity, on the one hand, between the inlet (125a) and the high-pressure chamber (12) and, on the other hand, between the inlet (125b) and the low-pressure chamber (13).

9. System according to one of Claims 1 to 8, **characterized in that** the expansion valve head (14) of the first module (10) is of the type allowing the fluid to escape through (16) the body of the said valve head (14) .

10. System according to one of Claims 1 to 9, **characterized in that** the second module (20) has purge means (40 to 49), preferably a purge plug (40).

11. System according to one of Claims 1 to 10, **characterized in that** the rotatable ring (21) is carried by the second module (20).

12. Fluid line equipped with at least one system according to one of Claims 1 to 11.

13. Use of at least one system according to one of Claims 1 to 11, for expanding a fluid flowing in at least one fluid line (5), particularly a gas line.

14. Use of at least one system according to Claim 13, in which the second module (20) carrying the rotary ring (21) is fitted permanently to the said line (5) and in which the first module (10) can be connected to or disconnected from the said second module (20) by actuating the ring (21) at least rotationally, in order to allow the said first and second modules to be connected to or disconnected from each other, respectively.

15. System according to Claim 2, **characterized in that** 2 to 4 housings are provided in the wall of the first module (10).

16. Network of several lines according to Claim 12.

17. Use according to Claim 13, **characterized in that** the fluid line (5) is located, at least partly, inside a building for medical care.

## Patentansprüche

1. Fluidentspannungssystem (1) bestehend aus mindestens einem ersten Modul (10) und einem zweiten Modul (20), die miteinander zusammenwirken und miteinander verbunden oder voneinander getrennt sein können für mindestens eine Fluidentspannung, wobei die Verbindung der Module (10, 20) miteinander durch vom ersten Modul (10) und/oder vom zweiten Modul (20) gehalterte Verbindungsmittel (11, 21, 22) erfolgt, bei dem
- das erste Modul (10) für mindestens eine Fluidentspannung einen Körper (111) umfasst mit:
. mindestens einem internen Fluiddurchgang (12, 13, 16, 18, 19) zwischen einer Fluideinlassöffnung und einer Fluidauslassöffnung,
. Fluidentspannungsmitteln (14, 15), die so auf oder in dem internen Fluiddurchgang (12, 13, 16, 18, 19) zwischen den Fluideinlass- und Auslassöffnungen angeordnet sind, dass das Fluid von mindestens einem ersten Druckniveau auf mindestens ein zweites Druckniveau entspannt wird und
- das zweite Modul (20) einen Körper umfasst mit mindestens:
. einem ersten Fluiddurchgangsabschnitt (125a) mit einer Fluideinlassöffnung und einer Fluidauslassöffnung, durch die das zu entspannende Fluid strömt,
. einem zweiten Fluiddurchgangsabschnitt (125b) mit einer Fluideinlassöffnung und einer Fluidauslassöffnung, durch die das Fluid nach seiner Entspannung im ersten Modul strömt, und wobei
. Ventilmittel (24, 24', 24") zur Kontrolle der Fluidströmung im ersten (125a) und/oder zweiten Fluiddurchgangsabschnitt (125b) im ersten (125a) und/oder zweiten Fluiddurchgangsabschnitt (125b) angeordnet sind,
und bei dem das erste und das zweite Modul (10, 20) durch Verbindungsmittel miteinander verbunden oder voneinander getrennt sind, die einen Drehring (21) mit mindestens einem Zapfen (22) aufweisen, der mit mindestens einer Aufnahme (11) in mindestens einem des ersten und zweiten Moduls (10, 20) zusammenwirkt, wobei eine Drehung des Rings (21) durch den Bediener eine Verschiebung des Zapfens bzw. der Zapfen (22) in ihrer Aufnahme (11) und je nach Drehung eine Verschiebung des ersten Moduls (10) zum zweiten Modul (20) hin bzw. von diesem weg bewirkt, um das erste Modul und das zweite Modul miteinander zu verbinden bzw. voneinander zu lösen.

2. System nach Anspruch 1, **dadurch gekennzeichnet, dass** mehrere Aufnahmen (11) in der Außenwand des ersten Moduls (10) angeordnet sind.

3. System nach einem der Ansprüche 1 oder 2, **dadurch gekennzeichnet, dass** die Aufnahmen (11) Schrägen sind.

4. System nach einem der Ansprüche 1 bis 3, **dadurch gekennzeichnet, dass** die Ventilmittel (24, 24', 24") jeweils in dem ersten (125a) und in dem zweiten Fluiddurchgangsabschnitt (125b) angeordnet sind und dass die Ventilmittel (24, 24', 24") vorzugsweise einen Ventilkörper (24) umfassen, der bei Durcheinwirkung durch ein elastisches Mittel (24") auf einem Ventilsitz (24') zum Anliegen kommt, sodass der Fluiddurchgangsabschnitt, in dem die Ventilmittel (24, 24', 24") angeordnet sind, mindestens teilweise verschlossen wird und damit die Fluidzirkulation in dem Fluiddurchgangsabschnitt (125a, 125b) verhindert wird, wenn das erste Modul (10) und das zweite Modul (20) voneinander getrennt sind.

5. System nach einem der Ansprüche 1 bis 4, **dadurch gekennzeichnet, dass** das erste Modul (10) mindestens einen internen Fluiddurchgang (12, 13, 16, 16', 18, 19) mit hintereinander einer Hochdruckkammer (12) und einer Niederdruckkammer (13) umfasst, wobei der Ventilkörper (24) zwischen der Hochdruckkammer (12) und der Niederdruckkammer (13) angeordnet ist.

6. System nach einem der Ansprüche 1 bis 5, **dadurch gekennzeichnet, dass** der interne Fluiddurchgang (12, 13, 18, 19) des ersten Moduls (10)
- ein erstes vorspringendes Ende (18) umfasst, das an die Hochdruckkammer (12) angeschlossen ist und eine Fluideinlassöffnung (18') zum Beschicken der Hochdruckkammer (12) mit nicht entspanntem Fluid aufweist, und
- ein zweites vorspringendes Ende (19) umfasst, das an die Niederdruckkammer (13) angeschlossen ist und eine Fluidauslassöffnung (19') zum Abführen des entspannten Fluids aus der Niederdruckkammer (13) aufweist,
und dass das erste und zweite vorspringende Ende (18, 19) des ersten Moduls (10) mit den Ventilmitteln (24, 24', 24") des zweiten Moduls (20) zusammenwirken, wenn das Modul (10) mit dem Modul (20) verbunden ist.

7. System nach einem der Ansprüche 1 bis 6, **dadurch gekennzeichnet, dass** der mindestens eine Zapfen (22) des Drehrings (21) mit einer Aufnahme (11) zusammenwirkt, indem er bei der Drehung des Ringes auf diese gleitet.

8. System nach einem der Ansprüche 1 bis 7, **dadurch gekennzeichnet, dass** das zweite Modul (20) eine erste Fluiddurchgangsverbindung (28) und eine zweite Fluiddurchgangsverbindung (29) aufweist, die so zur jeweiligen Aufnahme der vorspringenden Enden (18, 19) ausgebildet sind, dass das Fluid zwischen dem Einlass (125a) und der Hochdruckkammer (12) einerseits und zwischen dem Einlass (125b) und der Niederdruckkammer (13) andererseits weiter strömen kann.

9. System nach einem der Ansprüche 1 bis 8, **dadurch gekennzeichnet, dass** das Entspannungsventil (14) des ersten Moduls (10) so ausgelegt ist, dass ein Ausströmen des Fluids durch (16) den Körper des Ventils (14) möglich ist.

10. System nach einem der Ansprüche 1 bis 9, **dadurch gekennzeichnet, dass** das zweite Modul (20) Entlüftungsmittel (40 bis 49), vorzugsweise einen Entlüftungsstopfen (40), aufweist.

11. System nach einem der Ansprüche 1 bis 10, **dadurch gekennzeichnet, dass** der drehbewegliche Ring (21) vom zweiten Modul (20) getragen wird.

12. Fluidleitung mit mindestens einem System nach einem der Ansprüche 1 bis 11.

13. Einsatz mindestens eines Systems nach einem der Ansprüche 1 bis 11 zur Entspannung eines in mindestens einer Fluidleitung (5) strömenden Fluids, insbesondere Gas.

14. Einsatz mindestens eines Systems nach Anspruch 13, bei dem das zweite, den Drehring (21) tragende Modul (20) fest auf der Leitung (5) montiert ist und bei dem das erste Modul (10) durch mindestens eine Drehbetätigung des Rings (21) zum Verbinden bzw. Lösen des ersten Moduls und des zweiten Moduls mit dem zweiten Modul (20) verbunden bzw. von diesem getrennt werden kann.

15. System nach Anspruch 2, **dadurch gekennzeichnet, dass** 2 bis 4 Aufnahmen in der Wand des ersten Moduls (10) angeordnet sind.

16. Netz von mehreren Leitungen nach Anspruch 12.

17. Einsatz nach Anspruch 13, **dadurch gekennzeichnet, dass** sich die Fluidleitung (5) mindestens teilweise im Innern eines Pflegegebäudes befindet.
